# EUROPEAN PATENT SPECIFICATION

(11) **EP 4 441 199 B1**
(45) Date of publication and mention of the grant of the patent: **15.07.2026**
(21) Application number: 22900757.0
(22) Date of filing: 22.11.2022
(51) Int. Cl.: G01N 27/414

(54) **METHODS FOR FLUID POTENTIAL EFFECT MITIGATION IN LARGE SCALE CHEMFET ARRAYS**
VERFAHREN ZUR REDUZIERUNG DES FLÜSSIGKEITSPOTENZIALWIRKUNG IN GROSSSKALIGEN CHEMFET-ARRAYS
PROCÉDÉS POUR L'ATTÉNUATION DE L'EFFET DU POTENTIEL DES FLUIDES DANS LES RÉSEAUX DE CHEMFET À GRANDE ÉCHELLE

(30) Priority: 01.12.2021 US 202163284948 P
(43) Date of publication of application: 09.10.2024
(73) Proprietor: Life Technologies Corporation, Carlsbad, CA 92008 (US)
(72) Inventor: DONOHUE, John, Carlsbad, California 92008 (US); KIM, Sungjoon, Carlsbad, 92008 (US)
(74) Representative: HGF
(86) International application number: PCT/IB2022/061281
(87) International publication number: WO 2023/100030

(56) References cited:
- US-A1- 2005 104 981
- US-A1- 2013 113 855
- US-A1- 2015 355 265
- US-A1- 2018 196 915
- US-A1- 2019 339 228
- US-A1- 2019 339 228
- US-A1- 2020 041 444
- US-A1- 2024 310 319
- EVERSMANN ET AL.: "A 128 x 128 CMOS Biosensor Array for Extracellular Recording of Neural Activity", IEEE JOURNAL OF SOLID-STATE CIRCUITS, vol. 38, no. 12, December 2003 (2003-12-01), XP011104329, Retrieved from the Internet <URL:https://ieeexpiore.ieee.org/abstract/document/1253878> DOI: 10.1109/JSSC.2003.819174

## Description

### CROSS REFERENCE TO RELATED APPLICATIONS

### BACKGROUND

Systems, apparatuses, and methods are described herein that can mitigate fluid potential noise arising during use of a sensor device that includes a large array of chemically-sensitive field effect transistor (ChemFET) sensors. Such a device can be used, for example, for nucleic acid sequencing and for cell analysis.

Changes in fluid potential during the progress of analysis using large scale ChemFET sensor arrays can be generated by the charging and discharging of parasitic capacitances in such sensor arrays. Furthermore, a contribution to fluid potential from active pixels proximal to reference pixels results in changes in fluid potential that are not uniform across the sensor array, and can be observed when switching between middle and top/bottom rows of the array. Row select switching couples this undesired contribution into the fluid via a capacitance from column metallization through active pixel parasitic capacitance. In addition to this column-to-fluid coupling capacitance, additional contributions to fluid potential noise may further be attributed to fluid resistance, leakage resistance, cumulative well resistance, and cumulative well capacitance.

US2018196915A1 relates to methods and systems for nucleic acid sequence analysis that can analyze data indicative of natural by-products of nucleotide incorporation events without the need for exogenous labels or dyes to identify nucleic acid sequences of interest. In particular, the methods and systems of the present teachings can process such data and various forms thereof to align fragments of the nucleic acid(s) of interest, particularly those analyzed using an addition sequencing technique, for example, as occurs with the use of nucleotide flows. US2020041444A1 relates to fluid potential artifact correction in reagent delivery systems. The document teaches a method for correcting nucleotide incorporation signals for fluid potential effects or disturbances arising in nucleic acid sequencing-by-synthesis includes.

In view of the above, it would be advantageous to have systems, apparatuses and methods for mitigating fluid potential effects in large scale ChemFET arrays. Methods which are in accordance with the present invention are defined in the appended claims.

### BRIEF DESCRIPTION OF THE DRAWINGS

The novel features of the present disclosure are set forth with particularity in the appended claims. A better understanding of the features and advantages of what is disclosed herein will be obtained by reference to the following detailed description, in which the principles of the present disclosure are utilized, and the accompanying drawings of which:
FIG. 1 is a block diagram illustrating generally a ChemFET-based analysis system of the present disclosure.
FIG. 2 is a schematic representation illustrating generally fluidic and sensor device components of a ChemFET-based analysis system of the present disclosure.
FIG. 3 is a diagram that illustrates generally system and device components of fluid potential noise according to the present disclosure.
FIG. 4A is a graph illustrating generally the average row voltage as a function of the spatial location of each thumbnail row of a sensor array device.
FIG. 4B is a graph that illustrates generally the average voltage across all columns of a sensor array as a function of time.
FIG. 5 is a schematic representation illustrating generally systems and apparatuses for mitigating fluid potential effect in a field effect transistor ChemFET-based analysis system of the present disclosure.
FIG. 6A illustrates generally a schematic representation of a 2-transistor (2T) sensor array of the present disclosure. FIG. 6B is an enlarged section of FIG. 6A.
FIG. 7 through FIG. 9 are flow diagrams illustrating generally methods for mitigating fluid potential effect in a large-scale ChemFET array-based analysis systems of the present disclosure.

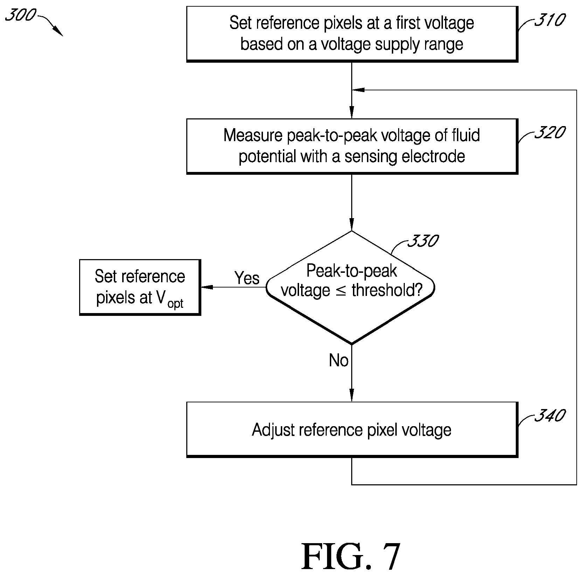

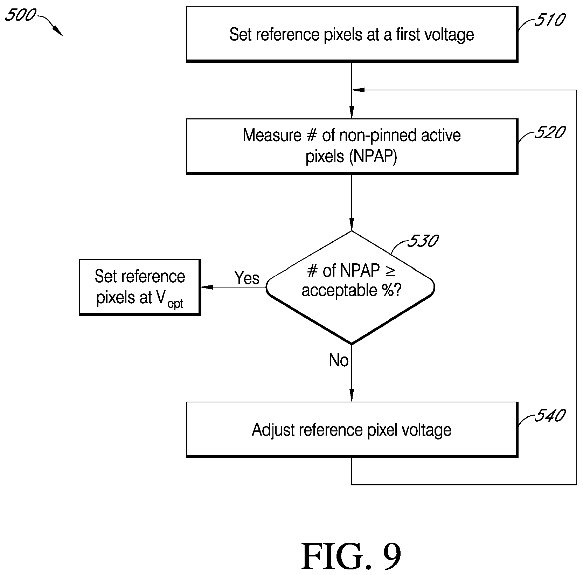

The methods as illustrated in FIG. 7 and 9 are in accordance with the present invention.

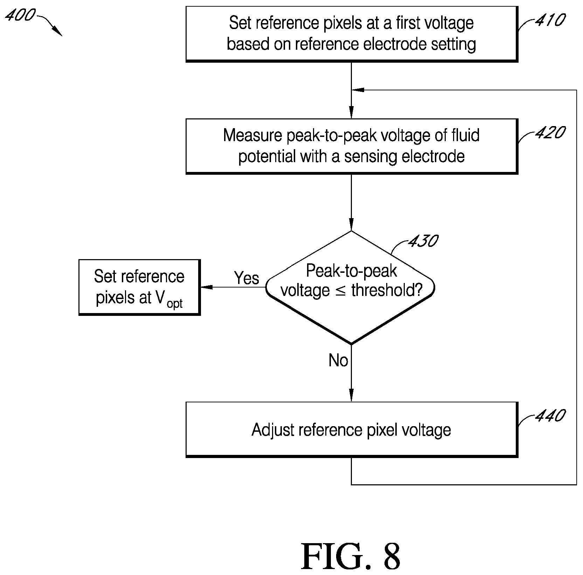

The method as illustrated in FIG. 8 is not in accordance with the present invention.

### DETAILED DESCRIPTION

As will be described in more detail herein, sensor array devices of the present disclosure include an array of microwells capacitively coupled to an array of chemically-sensitive field effect transistor (ChemFET) sensors, where there is at least one sensor per microwell. During use in analysis, a series of solutions are flowed over a sensor array device. For example, for sequencing, a series of deoxynucleotide triphosphate (dNPT) solutions can be flowed over a sensor array device, whereas for cell analysis, a series of various agents evoking a cell response can be flowed over a sensor array device. The present inventors have observed the impact of fluid potential noise resulting in changes of systemic fluid potential during the progress of analysis. Such changes in fluid potential can be generated by the charging and discharging of parasitic capacitances in large scale ChemFET sensor arrays.

Moreover, these changes in fluid potential are not uniform across the sensor array, and as will be demonstrated herein, can be observed when switching between middle and top/bottom rows of the array. The present inventors have discovered that the average row voltage varies from the top to bottom of a chip due to the state of the voltage of reference pixels. Additional contributions to fluid potential noise include, for example, but not limited by, fluid resistance, leakage resistance, cumulative well resistance, and cumulative well capacitance. As rows are sequentially selected during data acquisition from the array, fluid potential noise arises due to row select switching coupling average row-to-row voltage changes into the fluid via a capacitance from column metallization. The present inventors have determined that such fluid potential noise, which is systemic noise with a periodic profile, is indicative of an adverse impact on the function of sensor pixels proximal to reference pixels. Such adverse impact on sensor pixels in turn can adversely impact data quality. What is described herein are systems, devices and methods for mitigating fluid potential noise effects by substantially reducing row-to-row voltage changes between reference and active pixels.

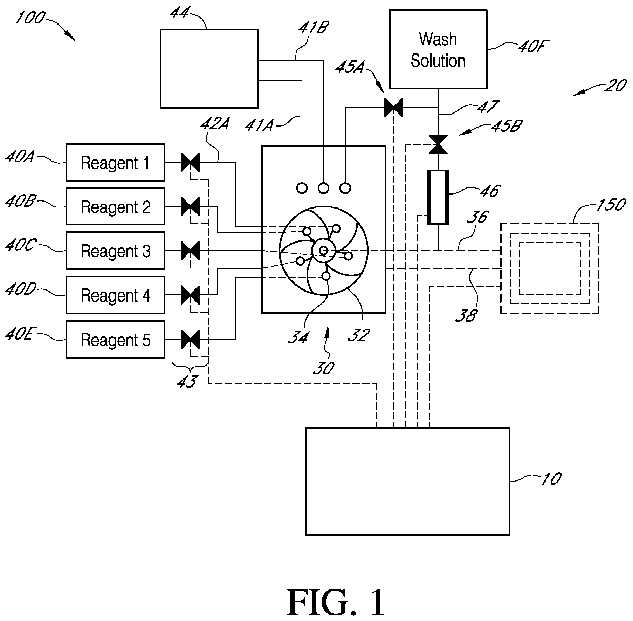

FIG. 1 is a block diagram that illustrates generally a ChemFET-based analysis system of the present disclosure; depicting the integration of various elements of fluidic system 20 with fluidic multiplexer device 30 and chip device 150. As depicted in FIG. 1, reagent and solution containers 40A-40E of fluidic system 20, are in fluid communication with fluidic multiplexer device 30. During use, sensor array device 150 is sealably attached to fluidic multiplexer device 30. Microfluidic multiplexer circuit 32 of fluidic multiplexer device 30 permits various user-selected reagents and solutions from reagents and solution containers 40A-40E to be controllably delivered to sensor array device 150 via reagent values 43, which are controlled through system controller 10. A selected reagent or solution can be placed in fluid communication with each of an inlet port, such as fluidic multiplexer circuit inlet ports 34 of FIG. 1, then directed to sensor array device 150 via fluidic multiplexer device inlet channel 36 of fluidic multiplexer device 30. Effluent flowing from sensor array device 150 is returned to fluidic multiplexer device 30 via fluidic multiplexer device outlet channel 38, which can be placed into fluid communication with any of fluidic manifold fluidic manifold waste lines 41A-41B to waste container 44. Accordingly, reagents and solutions from the fluidic system 20 can be selectively driven through fluidic multiplexer device 30 by control of reagent valves 43, which receive signals from system controller 10, and then through sensor array device 150 to waste container 44.

System controller 10 of FIG. 1 provides control for wash solution valves 43A and 43B, as well as control for wash solution valves 45A and 45B. Reference electrode 46 is an important component for providing a stable reference voltage to the sensor array device, as each sensor of a sensor array device generates an output signal that depends on the value of a stable reference voltage. As depicted in FIG. 1, reference electrode 46 is in fluid communication with a wash solution in wash solution container 40F through wash solution fluid line 47 and in contact with sensor device 150 via fluidic multiplexer device 30. Wash solution container 40F contains a wash solution of known electrolyte composition. As such, the constant electrolyte fluidic environment of reference electrode 46 provides a constant and stable reference voltage to sensor array device 150. As depicted in FIG. 1, valve 45A in wash solution line 47 provides for a controllable flow path for wash solution in wash solution container 40F to microfluidic multiplexer circuit 32, as well as to fluidic multiplexer device inlet channel 36. When a reagent or solution from reagents and solution containers 40A-40E is controllably selected, wash solution valve 45B is closed with reference electrode 46 in contact with the wash solution. If wash solution in wash solution container 40F is selected, the wash solution valve 45B is opened. During the delivery of a reagent or solution through the system, the reference electrode 46 remains in constant contact with wash solution, and a stable reference potential is applied to sensor array device 150. According to the present disclosure, reference electrode 46 can be a hollow cylindrical structure, for example, of an inert metal, non-limiting examples of which include stainless steel, platinum or titanium. Such hollow cylindrical metal structures, can provide effective ohmic contact with a fluid in a flow stream. Alternatively, the reference electrode could be a wire or a flat plate.

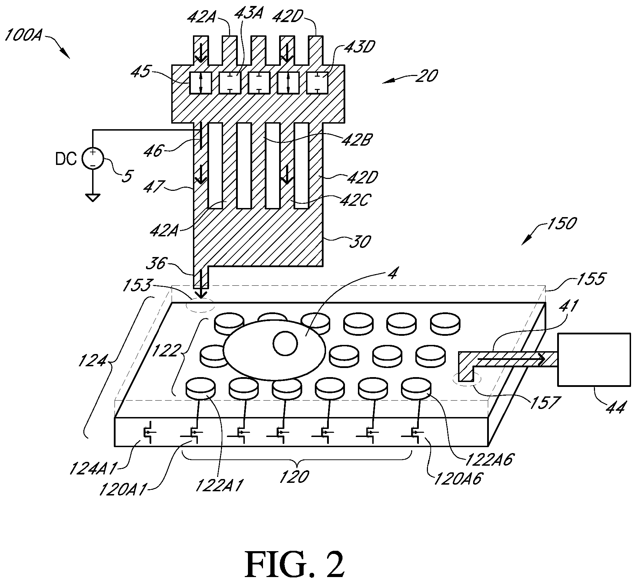

FIG. 2 a schematic representation illustrating generally a schematic representation of fluidic and sensor device components of a ChemFET-based analysis system of the present disclosure. As previously described herein, exemplary analysis systems of the present disclosure include sequencing systems, as well as cell analysis systems. Accordingly, FIG. 2 depicts cell 4, which is capacitively coupled to sensor array device 150. Analysis system 100A shares many of the same features as described for the schematic depiction of analysis system 100 of FIG. 1. Analysis system 100A of FIG. 2 can include fluidic system 20. Fluidic system 20 can include a plurality of fluid lines 42A-42D. Accordingly, sensor array device 150 of FIG. 2 can be in fluid communication with a reagent or solution, such as solution containers 40A-40E shown in FIG.1,through fluid lines 42A-42E.Flow from each reagent fluid line of an analysis system of the present disclosure can be controlled by a valve, such as reagent fluid line valves 43A-43D of FIG. 2. Fluidic system 20 can include wash solution fluid line 47. Wash solution fluid line 47 can be in controllable fluid communication with a wash solution container using wash solution valve 45. As depicted in FIG. 2, reference electrode 46 can be in wash solution fluid line 47, and as previously described herein, can provide a stable reference voltage 5 for sensor array device 150.

Sensor array device 150 can include sensor array or pixel array 120. As recited herein, the terms "sensor" and "pixel," as well the terms "device" and "chip" and derivatives of these terms can be used interchangeably. Additionally, "sensor array" and "ChemFET sensor array," and derivatives thereof can be used interchangeably.

**Table 1: Attributes of exemplary ChemFET sensors of the present disclosure**

| Chip Device | Pixels per Device | Pitch (µm) | Active Rows | Active Columns | Pixel Size (µm x µm) | Pixel Area µm²/pixel | FRₘₐₓ per Device (fps) |
|---|---|---|---|---|---|---|---|
| 1 | 40M | 3.36 | 5312 | 7680 | 2.910 x 3.360 | 9.78 | 120 |
| 2 | 165M | 1.68 | 10655 | 15455 | 1.453 x 1.680 | 2.44 | 30 |
| 3 | 300M | 1.26 | 10664 | 30912 | 1.093 x 1.262 | 1.38 | 30 |
| 4 | 660M | 0.85 | 21296 | 30912 | 0.733 x 0.846 | 0.62 | 15 |

Various sensor array devices of the present disclosure can have between about 40M to about 660M pixels, with a center-to-center spacing between each sensor; or the pitch, of between about 850 nm to about 3.36 µm. Though Table 1 illustrates devices with between 40M to 660M sensors, various sensors of the present teaching have between about 10⁷ pixels to about 10⁹ pixels per device. With respect to data collection, a collection of sensor output signals from all sensors in an array constitutes a frame of data. During analysis, frames of data are continuously sampled, and the rate at which they are sampled is the frame rate. For various sensor array devices of the present disclosure with between about 40 million pixels to about 660 million pixels, a frame of is a data file of substantial size, which is collected in units of hertz (Hz) as frames per second.

Though depicted in FIG. 2 as regular array two-dimensional array, various sensor arrays of the present disclosure can be arranged in a variety of array geometries, for example, in an hexagonal closest packed geometry. Sensor array device 150 can include a microwell array 122, which as illustrated in FIG. 2, depicts each microwell cooperatively engaged with each sensor or pixel in sensor array 120, so that each microwell 122A1 through microwell 122A6 is cooperatively engaged with a corresponding sensor 120A1 through sensor 120A6. However, for various sensor array devices of the present disclosure, there can be more than one pixel per well.

Each sensor of sensor array 120 can have a sensing surface on a sensor plate at the interface between a sensor and a microwell. As such, each sensor is capacitively coupled with the fluid in the microwell array 122. For various analysis systems, such as analysis system 100A of FIG. 2, each sensor of sensor array 120 can be a chemical field-effect transistor (ChemFET), where each sensor in sensor array 120 includes a chemically-sensitive field-effect transistor and a row select transistor. Sensor array 120 can include ChemFETs that can be fabricated with sensing surfaces modified to be selective for the analysis of a targeted chemical species of interest. For example, ion sensitive field-effect transistors (ISFETs) can have sensing surfaces modified to be selective for various ions of such as hydrogen, pyrophosphate, potassium, calcium and chloride.

In addition to the array of active sensors, such as sensor array 120, around the periphery of a sensor array of the present disclosure there can be several peripheral columns of reference pixels and several peripheral rows of reference pixels, forming a rim or border of reference pixels around an array of sensor pixels. For example, there can be about 2-4 peripheral columns and 2-4 peripheral row that can rim or border an array of active pixels. In FIG. 2, linear reference pixel array 124 is indicated, of which reference pixel 124A1 is shown. As depicted for reference pixel 124A1, each reference pixel in a sensor array device is not capacitively coupled to liquid in a well. As will be disclosed in more detail herein, each gate of each reference sensor is coupled to a corresponding reference line. Analysis systems of the present disclosure, can include an access circuit for accessing the chemical sensors and the reference sensors. A controller, such as system controller 10 of FIG. 1, can apply bias voltages to the reference lines to select corresponding reference sensors. The controller further acquires output signals from the selected reference sensors.

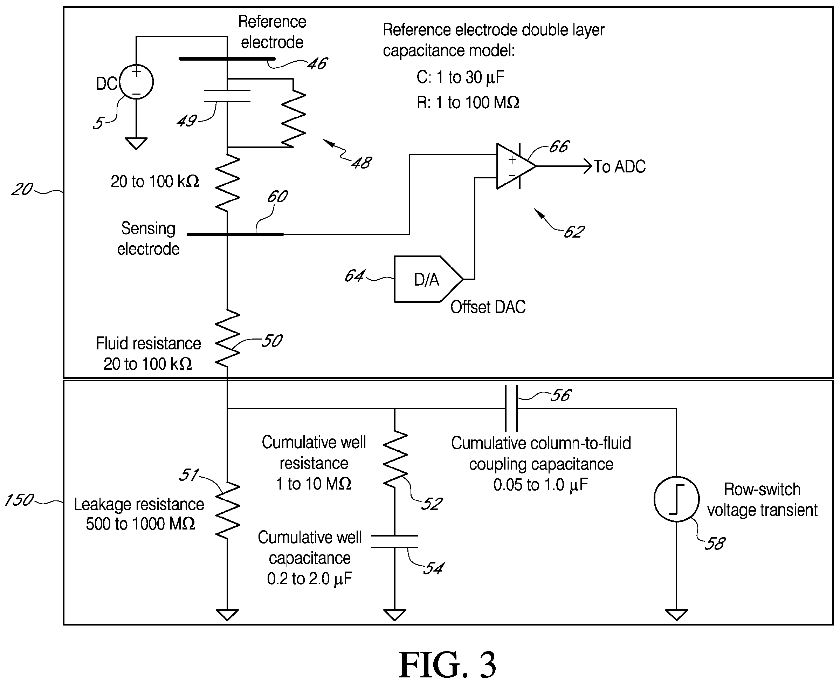

FIG. 3 is a diagram that illustrates generally an electronic diagram of factors contributing to fluid potential noise, as well as a sensing electrode for measuring fluid potential noise.

As depicted in FIG. 3, factors associated with fluidic system 20 include fluid resistance 50. Various fluid lines of an analysis system, such as fluid lines fluid lines 42A-42E of FIG. 1, connect between fluid sources, such as reagent and solution containers 40A-40E of FIG. 1, and the reference electrode, such as reference electrode 46 of FIG. 1. The conductivity of the reagents, diameter, and length of various fluid lines determine the electrical resistance of those interconnecting paths. For various analysis systems of the present disclosure, a value of the interconnecting resistances that cumulatively provide a system fluid resistance, such as fluid resistance 50 of FIG. 3, is in the range of 20 to 100 kΩ.

Factors associated with sensor array device 150 that contribute to fluid potential noise, as depicted in FIG. 3, include reference electrode double layer capacitance 49, leakage resistance 51, cumulative well resistance 52, cumulative well capacitance 54, cumulative column-to-fluid coupling capacitance 56, and row-switch voltage transient 58.

As shown in FIG. 3, a reference electrode double layer capacitance model includes reference electrode double layer ohmic resistance 48 and reference electrode double layer capacitance 49. Without reference electrode double layer ohmic resistance 48, reference electrode 46 could not apply a stable DC reference voltage, such as reference voltage 5, to the fluid. The reference electrode double layer ohmic resistance can be between 1kΩ and 100 kΩ. With respect to reference electrode double layer capacitance 49, any metal electrode with applied potential in contact with an electrolyte solution displays a capacitance at the interface between the electrode and solution, with a value determined by the area of the contact and the conductivity of the solution. This capacitance, in combination with the cumulative well capacitance, stores charge introduced from the row-switch voltage transient via the cumulative column-to-fluid coupling capacitance, thereby determining the fluid potential changes. For various systems of the present disclosure, reference electrode double layer capacitance values in the range of 1 to 30 µF have been determined.

Regarding leakage resistance 51, though various sensor array devices are designed to be highly insulated from any electrical potentials, including ground, some small amount of leakage resistance is unavoidable. For various sensor array devices of the present disclosure, leakage resistance values in the range of 500 to 1000 MΩ have been determined.

With respect to cumulative well resistance 52, the dimensions and related volume of each sensor well, combined with the reagent conductivity, yields a resistive component in series with each sensor capacitance. As previously described herein, there are the variety of sensor array devices that can be used for analysis, each accordingly having an array of microwells with a specified dimension and related volume. As such, in consideration of the variation of sensor array devices, the cumulative resistance of the at least 10⁷ sensor wells yields a cumulative well resistance 52 in the range of 1 to 10 MΩ.

Regarding cumulative well capacitance 54, recalling that each sensor plate is in fluidic communication with each corresponding microwell. The combination of each sensor plate and connected sense transistor (ChemFET), even when not active, has a small stray capacitance to ground. This small stray capacitance added over millions of sensors yields a significant capacitance which can be estimated based on the cumulative number of sensors, area of each sensor plate and transistor design. With respect to the variation of sensor array devices of the present teachings, cumulative well capacitance 54 is in the range of 0.2 µF to 2.0 µF.

With respect to cumulative column-to-fluid coupling capacitance 56, as will be described in more detail subsequently herein, each sensor in a column is connected to a column line. Each column line is electrically coupled to the fluid via the stray capacitance of all unselected sensors attached to that column. The stray capacitance of each unselected sensor is determined by the series drain-source stray capacitance through the row select transistor and the sense transistor source-gate stray capacitance. In consideration of the variation of sensor array devices of the present teachings, when combined across all columns and all sensors, cumulative column-to-fluid coupling capacitance 56 is approximately ½ of the cumulative well capacitance, in the range of 0.05 µF to 1.0 µF.

Finally, the row-switch voltage transient 58 is a factor arising due to the variation in average voltage across all column lines in a sensor array device. Over the course of each frame, sensor array device rows are sequentially selected and the sensors are connected to their corresponding columns. As will be described in more detail herein, this results in a variation of the average column voltage based on the variation in average row voltages, which can be measured over the course of collection of a frame. These voltage changes are coupled into the fluid via the cumulative column-to-fluid coupling capacitance, with the resulting effect on the fluid potential determined by the combination of electrical resistances and capacitances as previously described herein. As will be described in more detail herein, the row-switch voltage transient causes voltage to be coupled into the fluid, which is stored in the reference electrode double layer capacitance and the cumulative well capacitance, thereby resulting in a net change of the fluid potential.

As indicated in FIG. 3, sensing electrode 60 is located in fluidic system 20, proximal to reference electrode 46. Like reference electrode 46, sensing electrode 60 can be, for example, a hollow cylindrical structure, a wire, or a flat plate. Sensing electrode 60 can be fabricated from an inert metal, non-limiting examples of which include stainless steel, platinum or titanium. Such hollow cylindrical metal structures, can provide effective ohmic contact with a fluid in a flow stream. Sensing electrode circuitry 62 includes offset digital-to-analog converter (DAC) 64 and amplifier 66. The output of amplifier 66 goes to an analog-to-digital converter (ADC) in a control circuit. The fluid potential changes detected by the sensing electrode are used to determine the magnitude of the effects introduced from the row-switch voltage transients. As will be subsequently described herein, these detected changes can be used to adjust the values applied to the reference pixels in order to minimize and mitigate the effects of the voltage transients.

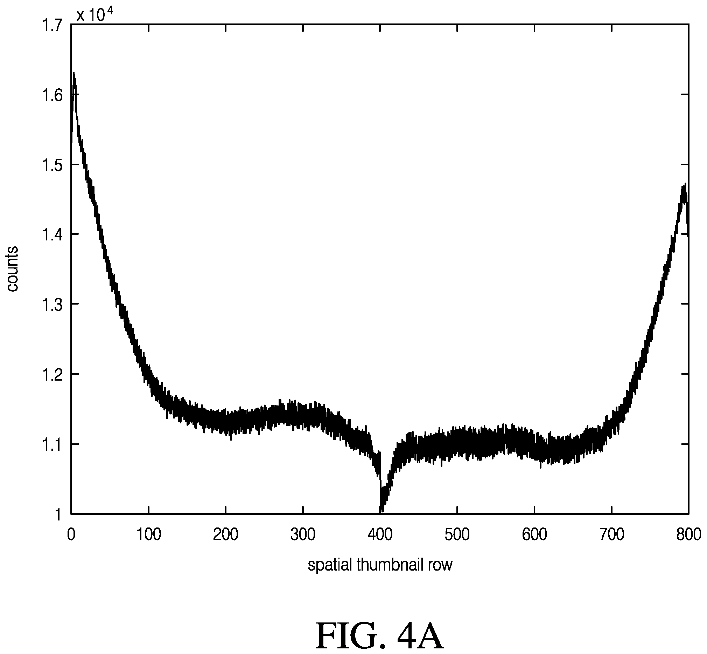

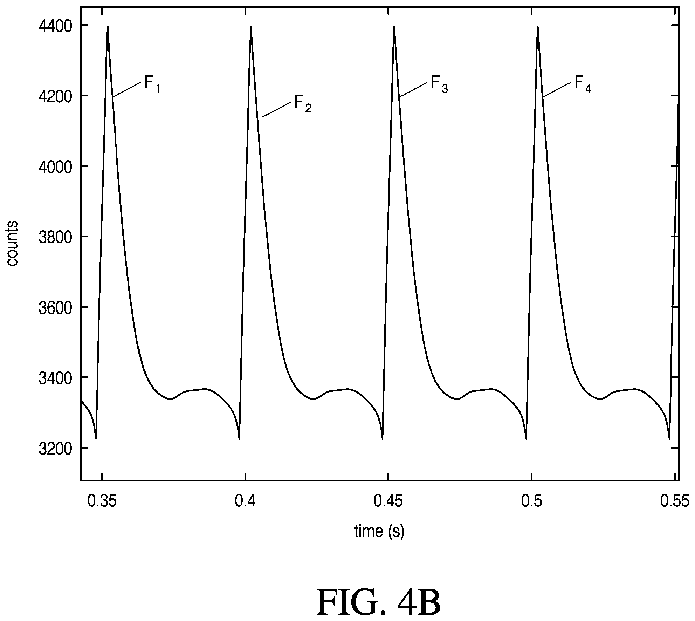

The present inventors made fundamental observations regarding fluid potential noise, which is illustrated in FIG. 4A and FIG. 4B.

FIG. 4A is a graph that illustrates generally the average thumbnail row voltage for rows of active sensor pixels as a function of the spatial location of each thumbnail row, where, given the large number of rows, a statistical or thumbnail sample of rows across a chip is taken. The type of chip used to generate the data in FIG. 4A and FIG. 4B was a type 2 chip of Table 1. Given the large amount of data generated from a chip during use, each half of rows of a sensor array is simultaneously but separately sampled, with the signals of each half being simultaneously sent to a processor. In that regard, rows of active sensor pixels are sequentially and continuously sampled from top-to-middle of the chip and bottom-to-middle of the chip. As can be discerned by inspection of the graph of FIG. 4A, the average row potential varies across the chip. Upon further investigation, the findings of present inventors are that the reference pixels, which are not capacitively coupled to fluid in microwells, and hence are not in continuous contact with the reference electrode, were at a potential that impacted near-neighbor sensing pixels, thereby increasing the average row voltage for rows of pixels proximal to reference pixels. That the reference pixels affect only near-neighbor sensing pixels is manifested in the graph of FIG. 4A, in which the average row potential varies across the chip. As will be described in more detail herein, the impact of fluid potential noise can be severe enough to cause a significant number of near-neighbor pixels to be out of range in a chip measurement system, resulting in, for example a reduced number of reads in a sequencing run. A reduced number of reads can in turn have a undesirable impact on the quality of a sequencing run. By way of another example, a significant number of out of range near-neighbor pixels can result in loss of information for a cell analysis run.

FIG. 4B is a graph that illustrates generally the average voltage across all columns of active sensor pixels of a sensor array as a function of time as measured using a sensing electrode, such as sensing electrode 60 of FIG. 3. Recalling, a frame of data is a collection of sensor output signals from all sensors in an array, which are continuously sampled at a defined frame rate. What is depicted in FIG. 4B is the average voltage across all columns of a sensor array over 4 frames of data collected over a 0.20 second interval, or 20 fps. As previously described herein, the row-switch voltage transient causes charge to be coupled into the fluid, which is stored in the reference electrode double layer capacitance and the cumulative well capacitance, thereby resulting in a net change of the fluid potential. When row switching occurs from the center to the top or bottom rows close to the reference pixels, the net change in fluid potential in addition to coupling of the reference electrode potential causes the average column potential to spike, as shown in FIG. 4B. As row selection continues to the center, the capacitive discharge proceeds, as it apparent from the decay in the trailing edges of the periodic spikes in FIG. 4B. As depicted in FIG. 4A, this results in a variation of the average column voltage based on the variation in average row voltages. As can be discerned by inspection of the graph of FIG. 4B, there is a periodic saw-tooth spike on the average voltage across the chip column metallization, each trailing half of which has a pattern similar to the first half of the graph of FIG. 4A.

As such, given the magnitude of the contribution to the average column potential from the reference pixels, the present inventors focused attention on mitigation strategies for substantially diminishing or eliminating the impact of reference pixels as illustrated in FIG. 4A and FIG. 4B. Accordingly, the present inventors have conceived of and provided for systems, apparatuses and methods for mitigating fluid potential effects in large scale ChemFET arrays.

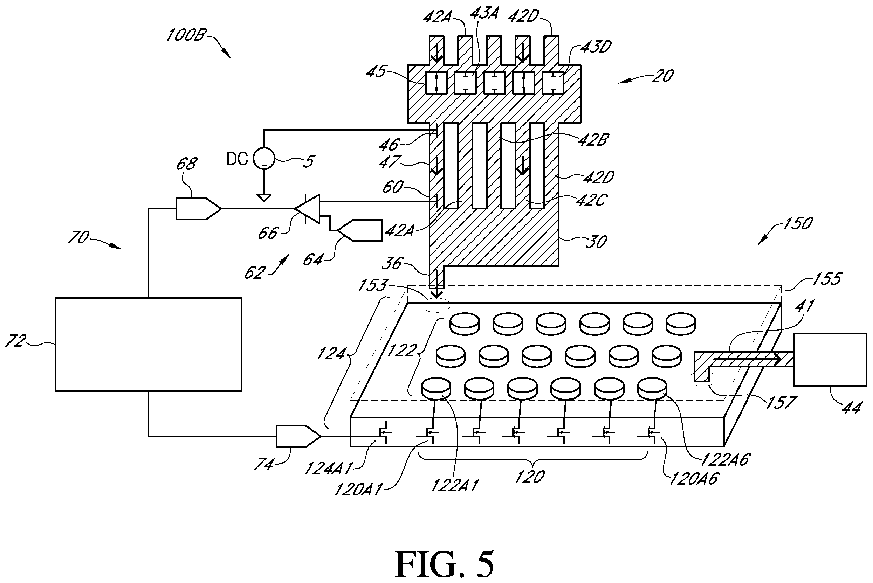

FIG. 5 is a schematic representation illustrating generally systems and apparatuses for mitigating fluid potential effect in a ChemFET-based analysis system of the present disclosure. Analysis system 100B shares many of the same features as analysis system 100A of FIG. 2. In addition to analysis system 100A of FIG. 2, analysis system of 100B of FIG. 5 includes sensing electrode 60 located in fluidic system 20, proximal to and reference electrode 46, and is as depicted in FIG. 5, is in wash solution fluid line 47. Sensing electrode 60 is coupled to sensing electrode circuitry, which includes offset DAC 64 and amplifier 66. Sensing electrode 60 is directly coupled to amplifier 66 whose output is coupled to ADC 68. ADC 68 is part of control circuit 70, and the output from ADC 68 is coupled to controller 72, which controls a voltage source (not shown) connected to DAC 74. As shown in FIG. 5, the voltage source is connected to the linear array of reference pixels 124. As such, fluid potential noise measured by sensing electrode 60 is fed into controller 72, which can apply a voltage to reference pixels.

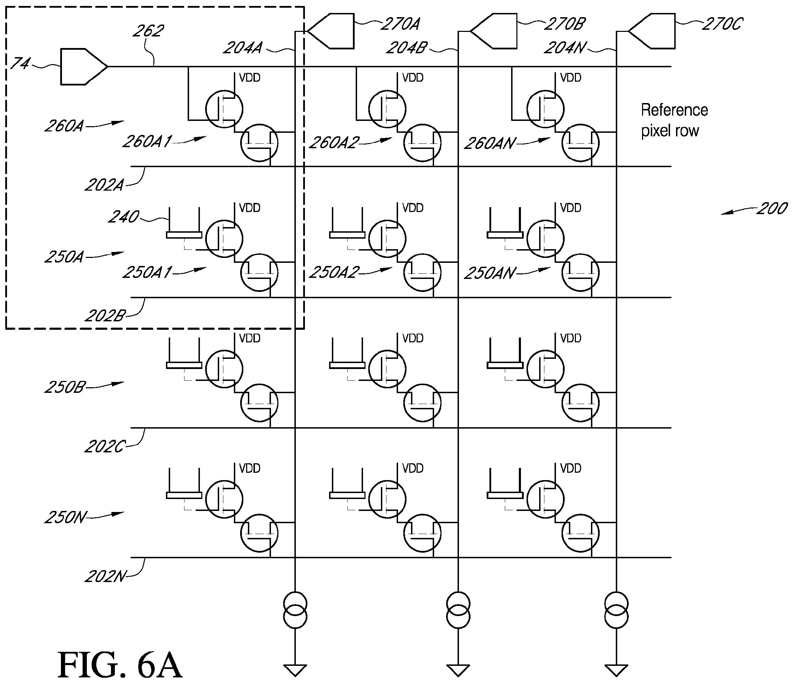

FIG. 6A illustrates generally a schematic representation of a 2-transistor (2T) pixel array of the present disclosure for a sensor array device, such as described for sensor array device 150 of FIG. 1 in analysis system 100, for sensor array device 150 of FIG. 2 in analysis system 100A, and for sensor array device 150 of FIG. 5 in analysis system 100B, as well as presented in Table 1.

Sensor array 200 of FIG. 6A depicts 4 rows and 3 columns of an N by N array of sensors of the present disclosure. As summarized in Table 1, an N X N array of pixels can range from about 5312 rows by 7680 columns to about 21296 rows by 30912 columns. As previously described herein, an array of active pixels can be rimmed or bordered by several peripheral columns of reference pixels and several rows of reference pixels. For example, there can be about 2-4 peripheral columns and 2-4 peripheral rows that can rim or border an array of active pixels. As depicted in FIG. 6A, the first row of pixels, reference pixel row 260A, includes reference pixels 260A1-260AN. The remaining rows of pixels are rows of sensor pixels 250, exemplified by sensor array row 250A, including sensor pixels 250A1-250AN. Sensor array 200 is depicted with reference pixel row control line 262, sensor row lines 202A-202N, and column lines 204A-204N.

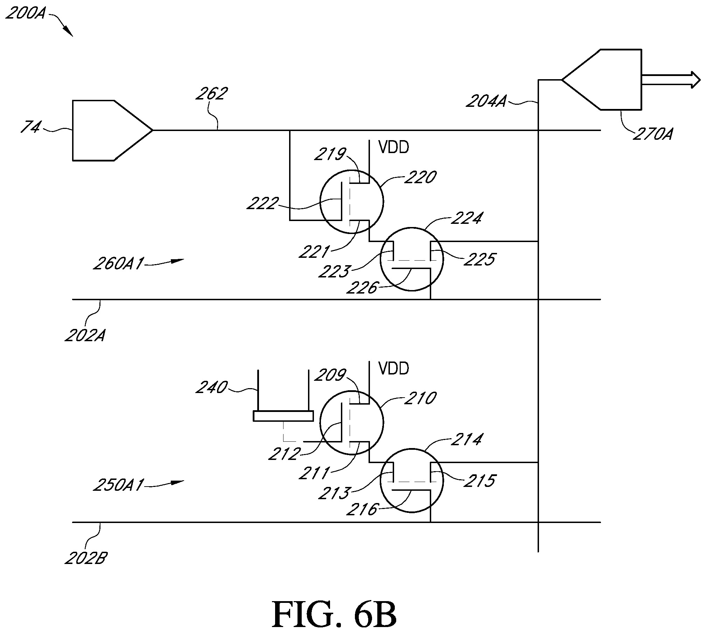

FIG. 6B is an expanded view of a section of FIG. 6A, as indicated by the hatched area of FIG. 6A, and depicts an exemplary sensor pixel 250A1, and an exemplary reference pixel 260A1.What is described herein for sensor pixel 250A1 is an exemplification of each sensor pixel in an array of the present disclosure, such as sensor pixel rows 250A-250N of FIG. 6A. As depicted for sensor pixel 250A1 of FIG. 6B, each pixel is capacitively coupled to a microwell, such as microwell 240. Each pixel in an array of the present disclosure is a two transistor (2T) pixel. As depicted in FIG. 6B, sensor pixel 250A1, includes a chemically-sensitive field effect transistor (ChemFET), such as ChemFET 210, as well as a row select transistor, such as row select transistor 214. Sensor gate 212 of ChemFET 210 is capacitively coupled to microwell 240. Drain 209 of ChemFET 210 is coupled to DC power supply VDD, while source 211 of ChemFET 210 is coupled to drain 213 of row select transistor 214. As depicted in FIG. 6B, gate 216 of row select transistor 214 is coupled to row line 202B, while source 215 of row select transistor 216 is coupled to column line 204A. Signals collected from sensors connected to column line 204A, are digitized on-chip via ADC 270A, and then transmitted from the chip for processing. As indicated in FIG. 6A, each column 204A-204N has an ADC, shown as 270A-270N, respectively.

As depicted in FIG. 6A, reference pixels 260A-260N of FIG. 6A are also 2T pixels, each of which are not capacitively coupled to fluid in a microwell, rendering the ChemFET of a reference pixel inactive as a chemical sensor. Each reference pixel 260A-260N of FIG. 6A includes reference sensor 220 and row select transistor 222. What is described herein for reference pixel 260A1 is an exemplification of each reference pixel in an array of the present disclosure, such as reference pixels 260A1-260AN depicted in row 260A-of FIG. 6A.

As depicted for reference pixel 260A1 of FIG. 6B, drain 219 of reference sensor 220 is coupled to DC power supply VDD, while source 221 of reference sensor 220 is coupled to drain 223 of row select transistor 224. As depicted in FIG. 6B, gate 226 of row select transistor 224 is coupled to row line 202A, while source 225 of row select transistor 226 is coupled to column line 204A, so that signals from reference pixel 260A1 are digitized on-chip via ADC 270A, and then transmitted from the chip for processing. As exemplified by reference pixel 260A, gate 222 of reference pixel 220 is coupled reference pixel row control line 262, and therefore to a control circuit, such as control circuit 70 of FIG. 5, through DAC 74. Input to control circuit 70 of FIG. 5 comes from sensing electrode 60 into controller 72 and from controller 72 through DAC 74 into refence pixel row control line 262. As previously described herein, a controller, such as controller 72 of FIG. 5, controls a voltage source, which can controllably apply a voltage to the reference pixels through reference pixel row control line 262. As depicted in FIG. 6A, reference pixels 260A-260N can be selected through row line 202A and sampled through column lines 204A-204N in the same manner the sensor pixels 250A-250N can be selected by row lines 202B-202N and sampled through column sensor row lines 204A-204N.

According to the present disclosure, row select circuitry (not shown) is connected to sensor row lines 202A-202N. As previously described herein, the row select circuitry may be used to sequentially select rows, which may lead to an undesirable coupling of potential into fluid via capacitance of column metallization. As depicted in FIG. 6A, and as shown in Table 1, the number of columns varies with the type of chip. Given the impact of column metallization on fluid noise, the contribution of column metallization increases with the number of columns per chip, which as summarized on Table 1, can range from about 7680 columns to about 30,912 columns. The fluid potential noise can change the offsets of some pixels, particularly near-neighbor pixels at the top and bottom of the array proximal to reference pixels. The offsets of near-neighbor pixels due to fluid potential noise can be severe enough to cause a significant number of near-neighbor pixels to be out of range in a chip measurement system, resulting in, for example a reduced number of reads in a sequencing run. A reduced number of reads can in turn have a undesirable impact on the quality of a sequencing run. By way of another example, a significant number of out of range near-neighbor pixels can result in loss of information for a cell analysis run.

FIG. 7 through FIG. 9 are flow diagrams illustrating generally methods for optimizing the performance of a sensor array device by mitigating fluid potential effects. The methods of FIG. 7 through FIG. 9 illustrate optimizing the performance of a sensor array device , such sensor array device 150 of FIG. 1 through FIG. 3 and FIG. 5, including a sensor array, such as sensor array 200 of FIG. 6A and FIG. 6B, in a ChemFET-based analysis system, such as analysis system 100 of FIG. 1, 100A of FIG. 2 and 100B of FIG. 5. As previously described herein, as reference pixels are not capacitively coupled to a microwell, and therefore are not in continuous contact with the reference electrode, their potential can impact near-neighbor sensing pixels via the potential change that can be introduced onto the column metallization and then capacitively coupled into the fluid.

Accordingly, method 300 of FIG. 7 illustrates generally a method (in accordance with the present invention) for adjusting the potential of reference pixels to a potential that mitigates the impact of fluid potential noise on near-neighbor sensing pixels. At step 310 , reference pixels are set a first voltage. As depicted in FIG. 5, controller 72 of control circuit 70 can apply an first voltage to reference pixels, such as reference pixels in reference pixel linear array 124 of FIG. 1 and FIG. 5, or as shown in FIG. 6A and FIG 6B. An initial voltage can be set near the center of a supply voltage range, or at a high or low value. According to the present disclosure, a voltage supply can provide a maximum voltage of between 1.2V to 3.6V. For example, if the maximum voltage of the supply voltage is 1.2V, then an initial voltage could be set at or near 0V, at or near 0.6V or at or near 1.2V. Likewise, if the voltage supply can provide a maximum voltage of 2.6V, then an initial voltage could be set at or near 0V, at or near 1.3V, or at or near 2.6V. Similarly, if the maximum voltage of the supply voltage is 3.6V, then an initial voltage could be set at or near 0V, at or near 1.8V or at or near 3.6V.

At step 320, a sensing electrode, such as sensing electrode 60 of FIG. 5, can be used to measure peak-to-peak voltage of sensor pixels for at least one frame, such as the peak-to-peak voltage of FIG. 4B. At step 330, the peak-to-peak voltage is compared to a threshold peak-to-peak voltage value. When a selected reference pixel voltage setting produces a measured peak-to-peak voltage that is less than or equal to a threshold peak-to-peak voltage, the reference pixels are at a voltage that is close to or effectively the same as the voltage of the active pixels. As such, a threshold peak-to-peak voltage can be selected to insure that the active pixels proximal to the reference pixels will not be driven out of range by the fluid potential changes resulting from reference pixels floating at an undefined potential. For example, the output voltage for various sensor devices such as those provided in Table 1, is typically in a range of 0mV-300 mV. Recalling, the contribution to the fluid noise effect from the reference pixels varies proportionally as the difference between reference pixel potentials and active pixel potentials. Accordingly, a peak-to-peak threshold voltage can be set as a percentage of the dynamic range of the output voltage of active pixels, reflecting an acceptable limit that the reference pixels can have on sensor device function for its intended use. For example, a peak-to-peak threshold voltage can be between about 1% of the dynamic range of the output voltage of the active pixels to about 30% of the dynamic range of the output voltage of the active pixels. As such, for example, based on the dynamic range of the output of a sensor of 0-300mV, a threshold voltage of between 3mV-100mV can be selected.

At step 340, If the measured peak-to-peak voltage remains above a threshold value, then an adjustment to voltage applied to the reference pixel voltage can be made. According to the present disclosure, sequential voltages can be applied based on a selected search strategy. For example, given a 2.6V power supply and a 12 bit DAC, increments of 0.6mV can be taken. A first search strategy for applying sequential voltages can be to set an initial voltage applied to the reference pixels at a defined minimum, for example 0V or a voltage close to 0V, and increment the setting by 0.6mV/step or some multiple thereof until the measured peak-to peak noise is at or below a selected threshold voltage. An alternative search strategy for applying sequential voltages can be to set an initial voltage applied to the reference pixels at a defined maximum, for example 2.6V or a voltage close to 2.6V, and decrement the setting by -0.6mV/step or some multiple thereof until peak-to peak noise is at or below a selected threshold voltage. Still another search strategy for applying sequential voltages can be to set an initial voltage applied to the reference pixels at a median voltage, for example, 1.3V or a value close to 1.3V and use a binary searching strategy by varying the voltage in 0.6mV/steps or some multiple thereof about the median voltage until peak-to peak noise is at or below a selected threshold voltage. The applied voltage at which the peak-to-peak noise is at or below the threshold voltage is the applied voltage at which the reference pixels can be maintained.

As indicated at step 330, once the peak-to-peak voltage of the fluid potential is less than or equal to the threshold voltage, the reference pixels can be set to that optimal voltage (Vₒₚₜ). Once the reference pixels have been set, the sensor array device has been optimized with respect to fluid potential effect mitigation, and for example, various calibration sequences can be performed before analysis is initiated. Alternatively, the optimized sensor array device may be used directly for analysis.

FIG. 8 is a flow diagram illustrating generally another method (not in accordance with the present invention) for adjusting the potential of reference pixels to a potential that mitigates the impact of the reference pixels on fluid potential noise on-near-neighbor sensing pixels. At step 410, of method 400, reference pixels are set at a first voltage based on a reference electrode setting. As depicted in FIG. 5, controller 72 of control circuit 70 can apply an first voltage to reference pixels, such as reference pixels in reference pixel linear array 124 of FIG. 1 and FIG. 5, or as shown in FIG. 6A and FIG 6B. The reference electrode setting can be in the middle of the supply voltage range for various sensor devices. For example, the reference electrode may be set to 1.3V +/-0.3 V. According to the present disclosure, an initial reference pixel voltage setting can be selected from any voltage at or between about 50% to about 90% of any reference voltage setting in the range of reference electrode settings.

For example, if the reference electrode is set at 1V, an initial reference pixel voltage setting can be 0.5V or 0.9V, or any value therebetween. Another exemplary initial pixel voltage setting can be between 0.7V to 1.2V, or any value therebetween, based on an initial reference electrode setting of 1.3V. Additionally, for a reference electrode setting at 1.6V, an initial reference pixel voltage setting can be 0.8V or 1.4V, or any value therebetween. Though the examples illustrate possible reference pixel voltage settings based on three reference electrode settings within an exemplary range of reference electrode settings, an initial reference pixel voltage setting can be selected from between about 50% to about 90% of any reference electrode setting.

Once an initial reference pixel voltage has been set, at step 420 of FIG. 8, as described for step 320 of FIG. 7, a sensing electrode, such as sensing electrode 60 of FIG. 5, can be used to measure peak-to-peak voltage of sensor pixels for at least one frame, such as shown in FIG. 4B. At step 430, that peak-to-peak voltage measured at step 420 is then compared to a threshold voltage. As previously described herein, a peak-to-peak threshold voltage can be selected to insure that the active pixels proximal to the reference pixels will not be driven out of range by fluid potential changes resulting from reference pixels floating at an undefined potential. Moreover, when a selected reference pixel voltage setting produces a measured peak-to-peak voltage that is less than to or equal to a threshold peak-to-peak voltage, the reference pixels are at a voltage that is close to or effectively the same as the voltage of the active pixels. As previously described herein, for an exemplary sensor devices of Table 1 having an output voltage range of between 0mV-300mV, a peak-to-peak threshold voltage can be set at as a percentage of between about 1% of the dynamic range of the output voltage of the active pixels to about 30% of the dynamic range of the output voltage of the active pixels. As such, for example, based on the dynamic range of the output of a sensor of 0-300mV, a threshold voltage of between 3mV-100mV can be selected.

At step 440, if the measured peak-to-peak voltage remains above a threshold value, then an adjustment to the refence pixel voltage can be made. As previously described for method 300 of FIG. 7, sequential voltages can be applied based on a selected search strategy. With respect to FIG. 8, a first search strategy for applying sequential voltages can be to set an initial voltage applied to the reference pixels at a value of 50% of a voltage value in the reference electrode range of 1.3V +/- 0.3 V, for example an initial voltage applied to the reference pixels of 0.5V, 0.7V, or 0.8V and incrementally increase the voltage applied to the reference pixels by 0.1mV/step or some multiple thereof until the measured peak to peak noise is at or below a selected threshold voltage. By way of an additional example, another search strategy can be to set an initial voltage applied to the reference pixels at a value of 90% of a voltage value in the reference electrode range of 1.3V +/- 0.3 V, for example an initial voltage applied to the reference pixels of 0.9V, 1.2V, or 1.3V and incrementally decrease the voltage applied to the reference pixels by 0.1mV/step or some multiple thereof until the measured peak to peak noise is at or below a selected threshold voltage. Still another search strategy for applying sequential voltages can be to set an initial voltage applied to the reference pixels at a median voltage, for example, 1.3V or a value close to 1.3V and use a binary searching strategy by varying the voltage in 0.1mV/steps or some multiple thereof about the median voltage until peak-to peak noise is at or below a selected threshold voltage. The applied voltage at which the peak-to-peak noise is at or below the threshold voltage is the applied voltage at which the reference pixels can be maintained.

As indicated at step 430, once the peak-to-peak voltage of the fluid potential is less than or equal to the threshold voltage, the reference pixels can be set to that optimal voltage (Vₒₚₜ). Once the reference pixels have been set, the sensor array device has been optimized with respect to fluid potential effect mitigation, and for example, various calibration sequences can be performed before analysis is initiated. Alternatively, the optimized sensor array device may be used directly for analysis.

As previously described herein, the impact of fluid potential noise can be severe enough that a significant number of near-neighbor pixels can be out of range for a chip measurement system. This can result in, for example a reduced number of reads in a sequencing run, and a reduced number of reads can in turn have a undesirable impact on the quality of a sequencing run. By way of another example, a significant number of out of range near-neighbor pixels can result in loss of information for a cell analysis run.

Accordingly, FIG. 9 is a flow diagram illustrating generally a method (in accordance with the present invention) for mitigating the impact of the reference pixels on fluid potential noise by measuring the impact on-near-neighbor sensing pixels. At step 510 of method 500, the reference pixels can be set at a first voltage, such as previously described for FIG. 7 and FIG. 8. As depicted in FIG. 5, controller 72 of control circuit 70 can apply a first voltage to reference pixels, such as reference pixels in reference pixel linear array 124 of FIG. 1 and FIG. 5, or as shown in FIG. 6A and FIG 6B. For example, the reference pixels can be set to a first voltage based on either a voltage supply range as described at step 310 for FIG. 7 or based on a reference electrode setting, as described at step 410 of FIG. 8.

At step 520 of method 500, during a calibration procedure for a sensor device and before an analysis is initiated, the number of non-pinned active pixels (NPAP) can be measured. At step 530, the number of measured NPAP can then compared to an acceptable limit of the target percent of NPAP. According to the present disclosure, the number of NPAP is at least 95% of all active pixels. Given that the number of pinned active pixels can be readily determined from the measured number of non-pinned active pixel, a limit can be set in terms of the acceptable percentage of pinned pixels. For example, if the number of NPAP is at least 95% of all active pixels, then less than 5% of active pixels can be pinned.

At step 540, if the percentage of NPAP remains below an acceptable limit, then an adjustment to the refence pixel voltage can be made. As previously described for method 300 of FIG. 7 and method 400 of FIG. 8, an adjustment to the voltage applied to the reference pixels. For example, the voltage applied to the reference pixels can be adjusted as described at step 340 for FIG. 7 or adjusted as described at step 440 of FIG. 8.

As indicated at step 530, when the number of measured non-pinned active pixels is greater than or equal to the acceptable limit, the reference pixels can be set to that optimal voltage (Vₒₚₜ). Once the reference pixels have been set, the sensor array device has been optimized with respect to fluid potential effect mitigation, and for example, various calibration sequences can be performed before analysis is initiated. Alternatively, the optimized sensor array device may be used directly for analysis.

While various systems, devices and methods of the present disclosure have been shown and described herein, it will be obvious to those skilled in the art that such systems, devices and methods are provided by way of example only. Numerous variations, changes, and substitutions will occur to those skilled in the art without departing from the present disclosure. It should be understood that various alternatives to systems, devices and methods described herein may be employed in practicing what is disclosed herein. The preceding statements of this paragraph regarding the disclosure are to be read in the understanding that the scope of protection for the invention is determined by the claims.

## Claims

1. A method for optimizing performance of a semiconductor device, comprising:
setting an array of reference pixels (124, 260A) of a sensor array device (150) at a first voltage, wherein the array of reference pixels borders an array of sensor pixels (120, 250A-N), wherein the array of reference pixels are not capacitively coupled to liquid in a well, and wherein each pixel in the array of sensor pixels includes a chemically-sensitive field effect transistor, ChemFET, (210), wherein each ChemFET (210) is capacitively coupled to liquid in a well;
measuring, using a sensing electrode (60) in a fluidic system, a peak-to-peak voltage of fluid potential associated with the array of sensor pixels;
comparing the peak-to-peak voltage of fluid potential measured to a threshold voltage; and
adjusting the setting of voltage applied to the array of reference pixels (124, 260A) in response to the peak-to-peak voltage of fluid potential measured falling above the threshold voltage, thereby mitigating fluid potential noise arising from row-to-row voltage changes between reference pixels and active sensor pixels.

2. The method of claim 1, wherein adjusting the setting of voltage applied to the array of reference pixels (124, 260A) comprises:
applying an incremental change in voltage applied to the array of reference pixels (124, 260A) starting from the first voltage;
repeating the steps of measuring and comparing after each incremental change in applied voltage; and
maintaining the array of reference pixels (124, 260A) at an applied voltage in response to the peak-to-peak voltage of fluid potential measured falling at or below the threshold voltage.

3. The method of claim 2, wherein the incremental change in voltage applied to the array of reference pixels (124, 260A) is an incremental increase in voltage starting from a voltage at or close to zero; optionally the incremental increase is in 0.6mV steps, or a multiple thereof.

4. The method of claim 2, wherein the incremental change in voltage applied to the array of reference pixels (124, 260A) is an incremental decrease in voltage starting from a voltage at or close to a maximum voltage of a voltage supply (VDD).

5. The method of claim 4, wherein the maximum voltage of the voltage supply (VDD) is 2.6V.

6. The method of claim 4, wherein the incremental decrease is in -0.6mV steps, or a multiple thereof.

7. The method of claim 2, wherein the incremental change in voltage applied to the array of reference pixels (124, 260A) is a binary change, and wherein the method comprises:
applying an incremental increase of voltage and an incremental decrease voltage to the array of reference pixels (124, 260A) from a starting voltage at or close to a median voltage of a voltage supply (VDD);
measuring each of a peak-to-peak voltage of fluid potential associated with the array of sensor pixels (250A-250N) for each of the incremental increase and incremental decrease in voltage;
comparing each of the first peak-to-peak voltage of fluid potential and the second peak-to-peak voltage of fluid potential measured to the threshold voltage; and
maintaining the array of reference pixels (124, 260A) at an applied voltage in response to either the first or the second peak-to-peak voltage of fluid potential measured falling at or below the threshold voltage.

8. The method of claim 1, wherein the first voltage is based on a reference electrode setting.

9. A method for optimizing performance of a semiconductor device, comprising:
setting an array of reference pixels (124, 260A) of a sensor array device (150) at a first voltage, wherein the array of reference pixels (124, 260A) borders an array of sensor pixels (120, 250A-N), wherein the array of reference pixels are not capacitively coupled to liquid in a well, and wherein each pixel in the array of sensor pixels includes a chemically-sensitive field effect transistor, ChemFET, (210), wherein each ChemFET (210) is capacitively coupled to liquid in a well;
measuring, using a sensing electrode in a fluidic system, a number of non-pinned active pixels in the array of sensor pixels (250A-250N);
comparing the number of non-pinned active pixels to an acceptable limit of the number of non-pinned active pixels; and
adjusting the setting of voltage applied to the array of reference pixels (124, 260A) in response to the number of non-pinned active pixels measured falling below the acceptable limit.

10. The method of claim 9, wherein the acceptable limit of non-pinned active pixels is at least 95% of active pixels.

## Patentansprüche

1. Verfahren zum Optimieren der Leistung einer Halbleitervorrichtung, umfassend:
Setzen einer Anordnung von Referenzpixeln (124, 260A) einer Sensoranordnungsvorrichtung (150) unter eine erste Spannung, wobei die Anordnung von Referenzpixeln an eine Anordnung von Sensorpixeln (120, 250AN) grenzt, wobei die Anordnung von Referenzpixeln nicht kapazitiv mit Flüssigkeit in einer Vertiefung verbunden ist, und wobei jeder Pixel in der Anordnung von Sensorpixeln einen chemisch-empfindlichen Feldeffekttransistor, ChemFET (210), umfasst, wobei jeder ChemFET (210) kapazitiv mit Flüssigkeit in einer Vertiefung verbunden ist;
Messen einer Spitze-zu-Spitze-Spannung eines Fluidpotentials, das mit der Anordnung von Sensorpixeln assoziiert ist, unter Verwendung einer Messelektrode (60) in einem Fluidiksystem;
Vergleichen der gemessenen Spitze-zu-Spitze-Spannung eines Fluidpotentials mit einer Schwellenspannung; und
Anpassen der Einstellung der an die Anordnung von Referenzpixeln (124, 260A) angelegten Spannung als Reaktion darauf, dass die gemessene Spitze-zu-Spitze-Spannung eines Fluidpotentials die Schwellenspannung überschreitet, wodurch Fluidpotentialrauschen, das aus zeilenweisen Spannungsänderungen zwischen Referenzpixeln und aktiven Sensorpixeln resultiert, gemindert wird.

2. Verfahren nach Anspruch 1, wobei das Anpassen der Einstellung einer an die Anordnung von Referenzpixeln (124, 260A) angelegten Spannung Folgendes umfasst:
Anlegen einer inkrementellen Veränderung einer an die Anordnung von Referenzpixeln (124, 260A) angelegten Spannung ausgehend von der ersten Spannung;
Wiederholen der Schritte des Messens und Vergleichens nach jeder inkrementellen Veränderung der angelegten Spannung; und
Aufrechterhalten der Anordnung von Referenzpixeln (124, 260A) auf einer angelegten Spannung als Reaktion darauf, dass die gemessene Spitze-zu-Spitze-Spannung eines Fluidpotentials auf die Schwellenspannung absinkt oder diese unterschreitet.

3. Verfahren nach Anspruch 2, wobei es sich bei der inkrementellen Veränderung einer an die Anordnung von Referenzpixeln (124, 260A) angelegten Spannung um eine inkrementelle Erhöhung der Spannung ausgehend von einer Spannung bei oder nahe null handelt; gegebenenfalls erfolgt die inkrementelle Erhöhung in Schritten von 0,6 mV oder einem Vielfachen davon.

4. Verfahren nach Anspruch 2, wobei es sich bei der inkrementellen Veränderung einer an die Anordnung von Referenzpixeln (124, 260A) angelegten Spannung um eine inkrementelle Verringerung der Spannung ausgehend von einer Spannung handelt, die der Maximalspannung einer Spannungsversorgung (VDD) entspricht oder in deren Nähe liegt.

5. Verfahren nach Anspruch 4, wobei die Maximalspannung der Spannungsversorgung (VDD) 2,6 V beträgt.

6. Verfahren nach Anspruch 4, wobei die inkrementelle Verringerung in Schritten von - 0,6 V oder einem Vielfachen davon erfolgt.

7. Verfahren nach Anspruch 2, wobei es sich bei der inkrementellen Veränderung einer an die Anordnung von Referenzpixeln (124, 260A) angelegten Spannung um eine binäre Veränderung handelt, und wobei das Verfahren Folgendes umfasst:
Anlegen einer inkrementellen Erhöhung der Spannung und einer inkrementellen Verringerung der Spannung an die Anordnung von Referenzpixeln (124, 260A) ausgehend von einer Anfangsspannung, die einer medianen Spannung einer Spannungsversorgung (VDD) entspricht oder in deren Nähe liegt;
Messen der jeweiligen Spitze-zu-Spitze-Spannung eines Fluidpotentials, das mit der Anordnung von Sensorpixeln (250A-250N) assoziiert ist, für jede inkrementelle Erhöhung und jede inkrementelle Verringerung der Spannung;
Vergleichen sowohl der ersten Spitze-zu Spitze-Spannung eines Fluidpotentials als auch der zweiten Spitze-zu-Spitze-Spannung eines gemessenes Fluidpotentials mit der Schwellenspannung; und
Aufrechterhalten der Anordnung von Referenzpixeln (124, 260A) auf einer angelegten Spannung als Reaktion darauf, dass entweder die gemessene erste oder zweite Spitze-zu-Spitze-Spannung eines Fluidpotentials auf die Schwellenspannung absinkt oder diese unterschreitet.

8. Verfahren nach Anspruch 1, wobei die erste Spannung auf einer Referenzelektrodeneinstellung basiert.

9. Verfahren zum Optimieren der Leistung einer Halbleitervorrichtung, umfassend:
Setzen einer Anordnung von Referenzpixeln (124, 260A) einer Sensoranordnungsvorrichtung (150) unter eine erste Spannung, wobei die Anordnung von Referenzpixeln (124, 260A) an eine Anordnung von Sensorpixeln (120, 250A-N) grenzt, wobei die Anordnung von Referenzpixeln nicht kapazitiv mit Flüssigkeit in einer Vertiefung verbunden ist, und wobei jeder Pixel in der Anordnung von Sensorpixeln einen chemisch-empfindlichen Feldeffekttransistor, ChemFET (210), umfasst, wobei jeder ChemFET (210) kapazitiv mit Flüssigkeit in einer Vertiefung verbunden ist;
Messen einer Anzahl nicht-angepinnter aktiver Pixel in der Anordnung von Sensorpixeln (250A-250N) unter Verwendung einer Sensorelektrode in einem Fluidiksystem;
Vergleichen der Anzahl nicht-angepinnter aktiver Pixel mit einem akzeptablen Grenzwert für die Anzahl nicht-angepinnter aktiver Pixel; und
Anpassen der Einstellung der an die Anordnung von Referenzpixeln (124, 260A) angelegten Spannung als Reaktion darauf, dass die Anzahl der gemessenen nichtangepinnten aktiven Pixel unter den zulässigen Grenzwert fällt.

10. Verfahren nach Anspruch 9, wobei der zulässige Grenzwert nicht-angepinnter aktiver Pixel bei mindestens 95 % der aktiven Pixel liegt.

## Revendications

1. Procédé d'optimisation des performances d'un dispositif à semi-conducteurs, comprenant :
mise à une première tension d'un réseau de pixels de référence (124, 260A) d'un dispositif à réseau de capteurs (150), dans lequel le réseau de pixels de référence est adjacent à un réseau de pixels de capteurs (120, 250A-N), dans lequel le réseau de pixels de référence n'est pas couplé de manière capacitive au liquide contenu dans un puits, et dans lequel chaque pixel du réseau de pixels de capteurs comprend un transistor à effet de champ sensible aux substances chimiques, ChemFET, (210) dans lequel chaque ChemFET (210) est couplé de manière capacitive au liquide dans un puits ;
mesure, à l'aide d'une électrode de détection (60) dans un système fluidique, d'une tension crête à crête du potentiel du fluide associé au réseau de pixels de capteur ;
comparaison de la tension crête à crête du potentiel du fluide mesurée à une tension de seuil ; et
ajustement de la tension appliquée au réseau de pixels de référence (124, 260A) en réponse au fait que la tension crête à crête du potentiel du fluide mesurée dépasse la tension de seuil, atténuant ainsi le bruit lié au potentiel du fluide résultant des variations de tension d'une ligne à l'autre entre les pixels de référence et les pixels de capteur actifs.

2. Procédé selon la revendication 1, dans lequel le réglage de la tension appliquée au réseau de pixels de référence (124, 260A) comprend :
application d'une variation progressive de la tension appliquée au réseau de pixels de référence (124, 260A) à partir de la première tension ;
répétition des étapes de mesure et de comparaison après chaque augmentation progressive de la tension appliquée ; et
maintien du réseau de pixels de référence (124, 260A) à une tension appliquée lorsque la tension crête à crête du potentiel du fluide mesurée tombe à un niveau égal ou inférieur à la tension de seuil.

3. Procédé selon la revendication 2, dans lequel la variation progressive de la tension appliquée au réseau de pixels de référence (124, 260A) consiste en une augmentation progressive de la tension à partir d'une tension égale ou proche de zéro ; éventuellement, cette augmentation progressive s'effectue par paliers de 0,6 mV, ou par un multiple de cette valeur.

4. Procédé selon la revendication 2, dans lequel la variation progressive de la tension appliquée au réseau de pixels de référence (124, 260A) consiste en une diminution progressive de la tension à partir d'une tension égale ou proche de la tension maximale d'une alimentation électrique (VDD).

5. Procédé selon la revendication 4, dans lequel la tension maximale de l'alimentation (VDD) est de 2,6 V.

6. Procédé selon la revendication 4, dans lequel la diminution progressive s'effectue par paliers de -0,6 mV, ou par un multiple de cette valeur.

7. Procédé selon la revendication 2, dans lequel la variation progressive de la tension appliquée au réseau de pixels de référence (124, 260A) est une variation binaire, et dans lequel le procédé comprend :
application d'une augmentation progressive de la tension et d'une diminution progressive de la tension au réseau de pixels de référence (124, 260A) à partir d'une tension initiale égale ou proche de la tension médiane d'une alimentation électrique (VDD) ;
mesure de la tension crête à crête du potentiel du fluide associé au réseau de pixels de capteur (250A-250N) pour chacune des augmentations et diminutions progressives de tension ;
comparaison de chacune des tensions crête à crête du potentiel du fluide (la première et la seconde) mesurées à la tension de seuil ; et
maintien du réseau de pixels de référence (124, 260A) à une tension appliquée dès lors que la première ou la deuxième tension crête à crête du potentiel du fluide mesurée tombe à un niveau égal ou inférieur à la tension de seuil.

8. Procédé selon la revendication 1, dans lequel la première tension est déterminée en fonction d'un réglage de l'électrode de référence.

9. Procédé d'optimisation des performances d'un dispositif à semi-conducteurs, comprenant :
mise à une première tension d'un réseau de pixels de référence (124, 260A) d'un dispositif à réseau de capteurs (150), dans lequel le réseau de pixels de référence (124, 260A) borde un réseau de pixels de capteur (120, 250A-N), dans lequel le réseau de pixels de référence n'est pas couplé de manière capacitive au liquide dans un puits, et dans lequel chaque pixel du réseau de pixels de capteur comprend un transistor à effet de champ sensible aux produits chimiques, ChemFET, (210), dans lequel chaque ChemFET (210) est couplé de manière capacitive au liquide dans un puits;
mesure, à l'aide d'une électrode de détection dans un système fluidique, du nombre de pixels actifs non fixés dans le réseau de pixels de capteur (250A-250N) ;
comparaison du nombre de pixels actifs non fixés à une limite acceptable de ce nombre ; et
ajustement de la tension appliquée au réseau de pixels de référence (124, 260A) lorsque le nombre de pixels actifs non verrouillés mesuré passe en dessous de la limite acceptable.

10. Procédé selon la revendication 9, dans lequel la limite acceptable de pixels actifs non fixés correspond à au moins 95 % des pixels actifs.
